Europäisches Patentamt

European Patent Office

Office européen des brevets

(11) Veröffentlichungsnummer: **0 319 726 B1**

# EUROPÄISCHE PATENTSCHRIFT

(45) Veröffentlichungstag der Patentschrift: **07.07.93**

(21) Anmeldenummer: **88118702.5**

(22) Anmeldetag: **10.11.88**

(51) Int. Cl.5: **A23L 2/38**, A23L 1/308, A23L 1/185

(54) **Trinkbarer wasserhaltiger Extrakt mit einem Gehalt an Wirk- und Werkstoffen des gekeimten Getreides und/oder von Leguminosen und/oder sonstiger körnerartiger Samen.**

(30) Priorität: **11.12.87 DE 3741991**

(43) Veröffentlichungstag der Anmeldung:
**14.06.89 Patentblatt 89/24**

(45) Bekanntmachung des Hinweises auf die
Patenterteilung:
**07.07.93 Patentblatt 93/27**

(84) Benannte Vertragsstaaten:
**AT BE CH DE FR GB LI LU NL SE**

(56) Entgegenhaltungen:
**EP-A- 0 199 105**
**AU-B- 553 881**
**DE-B- 1 261 741**
**FR-A- 1 012 425**

**JOURNAL OF FOOD SCIENCE. vol. 52, no. 03, Mai 1987, CHICAGO US Seiten 726 - 728; M.LUZ-FERNANDEZ et al.: "Characteristics of a chocolate beverage from germinated chickpeas"**

(73) Patentinhaber: **GEMÜSESAFT GmbH**
**Im Mäurich**
**W-7106 Neuenstadt a.K.-Stein(DE)**

(72) Erfinder: **Göbel, Armin**
**Steinbacher Gebirg 19**
**W-7114 Untersteinbach(DE)**
Erfinder: **Hitze, Winfried, Prof. Dr.-Ing.**
**Allerdinckstrasse 31**
**W-4400 Münster(DE)**

(74) Vertreter: **Ratzel, Gerhard, Dr.**
**Seckenheimer Strasse 36a**
**W-6800 Mannheim 1 (DE)**

EP 0 319 726 B1

**Beschreibung**

Die vorliegende Erfindung betrifft einen Keimgetreidetrunk erhältlich durch Keimen des Getreides bei Temperaturen über 25°C zur verstärkten Vitaminsynthese, Einmaischen des fertig gekeimten nicht wärmenachbehandelten Getreides, mit Ausnahme von Hafer, ungetrocknet mit den Wurzelkeimen und damit ohne Substanzverlust in naßvermahlenem Zustand, Maischen unter enzymatischem Aufschluß mittels der korneigenen natürlichen Enzyme bei Temperaturen von 45°C bis 65°C zwischen 1 und 3 Stunden, unter Berücksichtigung eines verstärkten Eiweißabbaus, Gewinnung von mehr löslichen Ballaststoffen und verstärkter Freisetzung von Vitaminen aus dem Zellverband, Verzicht auf Kochstufen im Maischprozess und im weiteren Herstellungsverfahren und Vergären der so erhaltenen Maische, der gegebenenfalls geklärten Würze mit einer Milchsäurekultur, die überwiegend L(+) Milchsäure bildet.

Bevorzugte Ausführungsformen des erfindungsgemäßen Keimgetreidetrunks sind in den Unteransprüchen aufgeführt.

Zum allgemeinen Stand der Technik wird das Handbuch der Lebensmittelchemie, Band V/1, Seiten 700 bis 701/1968 genannt, in welchem das Wissen des Fachmanns über Rohmaltose, Fructose und Saccharose, Glucose, Maltose und Dextrin im Zusammenhang mit der Herstellung von Extrakten in Kurzform referiert ist.

In den letzten fünf Jahren hat sich der Konsument wieder verstärkt einer uralten Ernährungsbasis, nämlich dem Getreide und den hieraus hergestellten Produkten zugewandt. Gefragt sind hierbei in immer höherem Maß Lebensmittel aus Stärke aus gemahlenen Mühleprodukten sowie die Produkte, die direkt aus dem vollen Korn bestehen bzw. dieses beinhalten. Der hohe Ballaststoffgehalt, das pflanzliche Eiweiß, der Vitamin- und Mineralstoffkomplex des Vollgetreides, sind hier neben einer heute wesentlich verbesserten Verarbeitung der Vollkorn-Produkt-Palette zu schmackhaften Erzeugnissen der Grund für das ständig steigende Interesse an diesen Produkten.

Neben diesem Haupttrend im Vollkornverzehr zeigt sich seit einigen Jahren auch ein sogenannter zusätzlicher Nebenverzehr-Trend; man versteht hierunter den Verzehr von frischem oder abgetrocknetem Keimgetreide.

Diese Produkte sind besonders gesund infolge der Tatsache,daß Keimgetreide im Keimprozess neue Vitamine synthetisieren und so eine Verdoppelung bis Verfünffachung ihres Ausgangsvitamingehalts erreichen.

Dem erfindungsgemäßen Keimgetreidetrunk liegt die Erkenntnis zugrunde, daß die ernährungsphysiologischen Vorteile des Vollkorns mit denen des gekeimten Korns verbunden werden. Hierbei wird also sozusagen aus einem Vollkorn-Keimgetreide ein Vollkorn-Trunk gemacht und damit die ernährungsphysiologisch besonders wertvollen Ausgangsprodukte in ein gut verzehrbares, leicht verdauliches, den Organismus nicht belastendes neues Verzehrprodukt überführt, ohne daß Verluste der wertgebenden Inhaltsstoffe stattfinden.

So gesund auch der Verzehr von festen Vollkornprodukten auch in gekeimter Form ist, so verlangen sie vom Verzehrenden doch eine sehr kräftige und intensive Kauarbeit und verlangen vom Organismus eine wesentlich erhöhte Verdauungsleistung, da sonst ein großer Teil der wertvollen Inhaltsstoffe ungenutzt den Körper verläßt. Dieser Nachteil der festen Vollkornprodukte wird durch den erfindungsgemäßen Keimgetreidetrunk überwunden, da dort die wertvollen Inhaltsstoffe vom Körper weitestgehend aufgenommen werden.

Grundsätzlich sind alle sieben Getreidearten zur Keimgetreide-Vollkorntrunk-Herstellung gemäß vorliegender Erfindung geeignet.

Gekeimter Hafer soll dabei nach der Keimung als ganzes Korn hydrothermisch mit Sattdampf behandelt werden, um die lipolytischen Enzyme zu inaktivieren.

Verschiedenste Getreideausmischungen werden bei der Durchführung des Keimverfahrens möglichst einem speziellen Keimverfahren unterworfen, mit dem Ziel, hohe Vitaminausbeuten zu erhalten. Dazu ist ein spezielles Kornwassergehalt-, Temperatur- und Zeitprogramm erforderlich. So geschieht beispielsweise die Keimführung insbesondere im Temperaturbereich von 25°C bis 30°C und darüber. Bereits hierdurch unterscheidet sich das Keimverfahren wesentlich von den üblichen Melzverfahren zur Herstellung für die Bierbereitung oder für die Herstellung sonstiger Malzprodukte. Während man nämlich sonst bei allen üblichen Melzverfahren auf einen möglichst geringen Extraktverlust d.h. Zuckerverlust bedacht ist, da primär hohe Extraktausbeuten gefordert werden und somit ein möglichst geringer Atmungsschwund und ein geringer Schwund durch den später abfallenden Wurzelkeim gefordert wird, ist beim vorliegenden Keimprozess der hohe Vitamingehalt die wertgebende Hauptkomponente, wobei ein langer Wurzelkeim hier keinen Verlust bedeutet, da sowieso eine Verarbeitung mit dem ganzen Korn stattfindet.

Bei der Durchführung des Maischverfahrens wird das gekeimte naßvermahlene Gesamtkorn in einem bezüglich Temperaturprogramm von der Bierherstellung abweichenden Maischverfahren enzymatisch aufgeschlossen undzwar mit dem Ziel, die Vitamine aus der Kornmatrix schonend freizusetzen und zu erhalten, sowie möglichst viel lösliche Ballast- und Eiweißstoffe zu bekommen.

Das Wasser-, Rohstoff-Verhältnis wird dabei vorzugsweise so gewählt, daß im Endprodukt ein echt löslicher Extraktgehalt von ca. 11,0 g pro 100 ml bei entsprechend höherem Gesamtextrakt gewährleistet werden kann.

Zur Maischeaufbereitung zum Endprodukt erfindungsgemäßer Keimgetreide-Trunk, wird die gesamte fertige Maische zunächst milchsauer vergoren und anschließend für Vollkornprodukte rückstandsfrei zum Endprodukt aufgearbeitet. Hierzu wird das Produkt mechanisch, beispielsweise mittels eines Spalthomogenisators und/oder enzymatisch homogenisiert. Für den enzymatischen Nachaufschluß bringt man mittels Filter oder Dekanter die noch unlöslichen Treberpartikel aus der milchsauren Maische ab und behandelt diesen Rückstand mit hemicellulytischen/cellulytischen Enzymen (z.B. mit Rohament PC, 0,2 g Enzym auf 100 g Feuchttreber, bei 45 bis 50°C für 1,5 Stunden), die in etwas partikelfreier milchsaurer Kornwürze (pH 4,0 bis 3,7) vorgelöst dem Rückstand zwecks Mazeration zugegeben werden. Das pH-Optimum solcher Mazerationsenzyme liegt im pH-Bereich 3,0 bis 5,0 - bevorzugt um pH 4,0.

Der abgebaute Ansatz wird thermisch kurz inaktiviert (85°C, 10 Minuten) anschließend der Kornwürze wieder zugemischt und das ganze Produkt durch Zusatz von Citruspektin (0,15 g bis 0,20 g pro 100 ml Endprodukt) stabilisert.

Das Produkt kann auf Flaschen abgefüllt und darin pasteurisiert werden. Es kann ferner die partikelfreie Kornwürze auch isoliert und mehr oder weniger nachgeklärt als Keimgetreidetrunk allein oder in Verbindung mit anderen Produkten eingesetzt werden.

Zum Stand der Technik wird insbesondere auch im Hinblick auf die obigen Darlegungen auf die DE-OS 29 52 059 hingewiesen, die sich auf ein Getränk bezieht, das dadurch gekennzeichnet ist, daß es im wesentlichen durch eine Fermentation einer Bierwürze mit homofermentativen Milchsäurebakterien hergestellt worden ist. Mit einer Fermentation einer Bierwürze hat vorliegende Erfindung keine Berührungspunkte, wie oben ausführlich dargelegt ist.

Wie aus der weiter unten folgenden tabellarischen Zusammenstellung zu entnehmen ist, hat das als KeimgetreideVollkorntrunk bezeichnete Produkt 1 noch die weiteren Vorteile:

Das Produkt enthält das gesamte pflanzliche Eiweiß und kann damit bis zu einem Drittel des durchschnittlichen Tages-Eiweiß-Bedarfs decken.

Ferner kann der Ballaststoffgehalt pro Liter bis zu ca. 14 g und rechnet man den Pektinstabilisator hinzu sogar bis zu ca. 15 g Ballaststoffe in gut trinkbarer Form betragen.

Hierzu sei bemerkt, daß der heutige tatsächliche Tages-Ballaststoff-Verzehr im Durchschnitt immer noch bei knapp 20 g pro Person und nicht etwa wie ärztlich empfohlen, bei etwa 30 g Tagesaufnahme pro Person liegt. Damit kann der erfindungsgemäße Keimgetreide-Vollkorntrunk auch zur optimalen Ballaststoff-Versorgung beitragen, was insbesondere für Kranke und ältere Personen von großer Wichtigkeit ist.

Der Erfindungsgegenstand stellt ein alkoholfreies und kühlgetrunken erfrischendes und durstlöschendes sofort verdauliches und den Verdauungstrakt nicht belastendes höchst gesundes Nahrungsmittel dar.

Der Erfindungsgegenstand wird insbesondere aus biologisch angebautem Getreide undzwar aus gekeimtem Roggen, gekeimter Gerste und gekeimtem Hafer hergestellt, er ist naturtrüb, er ist milchsauer vergoren mit einem überwiegenden Gehalt an L ( + ) -Milchsäure.

Der Erfindungsgegenstand ist auch als Alten- und Krankenkost hervorragend geeignet, da die Inhaltsstoffe überwiegend sofort verdaulich sind und den Verdauungstrakt nicht belasten. Die in ihm enthaltenen Getreide-Ballaststoffe, auch in gelöster Form, sowie die Milchsäure, sind verdauungsanregend.

Der erfindungsgemäße Keimgetreidetrunk enthält den Vitamin B-Komplex des gekeimten Getreides, wobei die heutigen Haupt-Defizit-Vitamine $B_1$, Folsäure, aber auch Vitamin $B_{12}$ im Keimgetreide verstärkt vorhanden sind. Der Erfindungsgegenstand bietet alle löslichen Getreidemineralstoffe bei einem in der heutigen kochsalzreichen Ernährung sehr günstigen Natrium/Kalium-Verhältnis.

Für die Getreide-Rohstoffe insbesondere aus biologischem Anbau hat sich in der Ausmischung ein Verhältnis von 55 % Roggen, 35 % Gerste und höchstens 10 % Hafer als besonders vorteilhaft herausgestellt.

Die Getreidekeimung wird in sogenannter "warmer Führung" durchgeführt.

Beim durchzuführenden Maischverfahren wird das gekeimte naßvermahlene Korn enzymatisch aufgeschlossen, wobei die Vitamine aus der Kornmatrix schonend freigesetzt werden und ferner möglichst viel lösliche Ballaststoffe und Eiweißstoffe erhalten werden.

Es wird daher bei diesem Maischverfahren insbesondere bei 45°C eingemaischt, auf die erste Haltestufe hochgeheizt und unter langsamem Rühren der Maischansatz bei 48 °C bis 50 °C für 120 Minuten gehalten.

Danach wird der Maischansatz pro Minute um 1 °C (Aufheizzeit mindestens 20 Minuten, höchstens 30 Minuten) auf die Vollverzuckerungsstufe 70 bis 72 °C hochgeheizt und hier bis zur Jodnormalität des

EP 0 319 726 B1

Ansatzes gehalten.

Mit dem Verzuckerungsabschluß der Maische wird auf 75°C langsam aufgeheizt, bei dieser Enzymgrenztemperatur die Jodnormalität nochmals überprüft und danach rasch auf 80 bis 82°C aufgeheizt,um bei dieser Temperatur zwecks Inaktivierung der korneigenen Enzyme 15 Minuten gehalten.

Sodann beginnt der eigentliche Läuterprozess,d.h. die Abtrennung wasserunlöslicher Treber von der Kornwürze. Auf den Einsatz von L-Ascorbinsäure im Waschwasser wie auch im Einmaischwasser wird vorzugsweise verzichtet.

Das Wasser/ Grünmalz-Verhältnis ist vorzugsweise so zu wählen, daß auch nach Auswaschen der Treber die für die Kontrollmessung geklärte Würze eine Spindelanzeige von mindestens 11,5 % Stammwürze aufweist.

Nach einer bevorzugten Ausführungsform wird die auf Anstelltemperatur gekühlte Würze unmittelbar danach mit Milchsäure-Kultur geimpft. Je schneller nämlich der pH-Wert absinkt, um so mikrobiell sicherer wird das Endprodukt und um so stabiler werden die oxidationsempfindlichen Enzyme, wie beispielsweise Vitamin $B_1$.

Sodann erfolgt der Abschluß der Milchsäuregärung; die jetzt milchsaure Ware wird trubstabil filtriert, die Filteranlagen nachgewaschen und mit dem Waschwasser/Zusatzwasser das Produkt auf vorzugsweise 11,0 g Extrakt pro 100 ml eingestellt. Dieses erfindungsgemäße Produkt wird als Grundtyp 1 bezeichnet. Es ist naturtrüb aber trubstabil. Es scheckt angenehm nach Getreide-und Milchsäure und wirkt, kühl getrunken, erfrischend.

Nähere Einzelheiten dieses Produkts 1 sind in der weiter unten folgenden Tabelle (tabellarische Zusammenstellung) aufgeführt.

Bei diesem erfindungsgemäßen Keimgetreide-Volltrunk, genannt Produkt 1, wird die Maische rückstandslos zum Endprodukt aufgearbeitet, ohne daß eine Filtration erfolgt.

Das in der Tabelle ebenfalls in den Einzelheiten erläuterte Produkt 2 stellt einen erfindungsgemäßen Keimgetreidetrunk dar, bei dem der unlösliche Treber herausgenommen, d.h. eine Filtration durchgeführt wurde.

Das in der Tabelle weiterhin in den Einzelheiten geoffenbarte Produkt 3 stellt eine beispielhafte Ausführungsform des erfindungsgemäßen Keimgetreidetrunks dar, bei dem sowohl die Herausnahme der unlöslichen Treber als auch eine Herausnahme des Kühltrubs stattgefunden hat, d.h. es wurden zwei Filtrationen durchgeführt.

4

Die Inhaltsstoffe der Keimgetreidetrunke

(Alle Mengenangaben bezogen auf 1 Liter Endprodukt)

| | Keimgetreidevollkorntrunk (ohne Filtration = Die Maische wurde rückstandslos zum Endprodukt aufgearbeitet) | Keimgetreidetrunk (1 Filtration=Herausnahme der unlöslichen Treber) | Keimgetreidetrunk (2 Filtrationen: a)Herausnahme der unlöslichen Treber b)Herausnahme des Kuhltrubs) |
|---|---|---|---|
| | Produkt 1 | Produkt 2 | Produkt 3 |
| Gesamtextrakt | 113 g = 100 % | 105 g = 100 % | 108 g = 100 % |
| verdauliche Kohlenhydrate, nämlich | 76,44 g = 67,6 % | 81,49 g = 77,6 % | 83,13 g = 77,0 % |
| Dextrine* | 1,3 g | 17,2 g | 13,3 g |
| Maltose (Malzzucker) | 49,2 g | 49,4 g | 53,2 g |
| Glukose | 11,2 g | 11,7 g | 13,7 g |
| Fructose | 1,7 g | 2,2 g | 2,3 g |
| Saccharose | 0,64 g | 0,65 g | 0,38 g |
| Lactose | 29 mg | 43 mg | 38 mg |
| Galactose | 0,22 g | 0,30 g | 0,21 g |

* Mit Jod nicht mehr anfärbbar

EP 0 319 726 B1

| | Produkt 1 | Produkt 2 | Produkt 3 |
|---|---|---|---|
| unverdauliche Kohlen-<br>hydrate = Gesamtballast-<br>stoffe | | | |
| -nach Berliner Methode | 12,3 g $\hat{=}$ 10,9% | 4,2 g $\hat{=}$ 4,0% | 5,0 g $\hat{=}$ 4,6% |
| -nach AOAC Methode | 12,7 g $\hat{=}$ 11,2% / (42,3%)[*] | ——— / (14,0%)[*] | 4,84g $\hat{=}$ 4,5% / (16,7%)[*] |
| hiervon:<br>lösliche Ballaststoffe | | | |
| -nach Berliner Methode | 6,2 g | 4,2 g | 5,0 g |
| -nach AOAC Methode | 5,4 g | ——— | 4,84 g |
| unlösliche Ballaststoffe | | | |
| -nach Berliner Methode | 6,1 g | n.n. | n.n. |
| -nach AOAC Methode | 7,3 g | ——— | n.n. |
| Eiweiß (Nx6,25) | 13,9 g $\hat{=}$ 12,3% / (27,8%)[*] | 8,86 g $\hat{=}$ 8,4%/(17,7%)[*] | 8,38 g $\hat{=}$ 7,8% / (16,8%)[*] |
| Nitrat | Spuren | Spuren | Spuren |
| Ethanol | 14,3 mg | 48,0 mg | 33,0 mg |

[*] % Anteil des für einen Erwachsenen von der Deutschen Gesellschaft für Ernährung empfohlenen durchschnittlichen Tagesbedarfs

EP 0 319 726 B1

|  | Produkt 1 | Produkt 2 | Produkt 3 |
|---|---|---|---|
| Säuren, gesamt:<br>hiervon: | 3,85 g ≙ 3,4% | 2,61 g ≙ 2,5% | 3,49 g ≙ 3,2 % |
| Citronensäure | 133 mg | 112 mg | 134 mg |
| Isocitronensäure | n.n. | n.n. | n.n. |
| L(+)-Milchsäure | 3,40 g ⎫ 3,72 g | 2,50 g ⎫ 2,50 g* | 2,40 g ⎫ 3,36 g |
| D(-)-Milchsäure | 0,32 g ⎭ | n.n. ⎭ | 0,96 g ⎭ |

\* Einsatz einer anderen MO - Kultur

|  | Produkt 1 | Produkt 2 | Produkt 3 |
|---|---|---|---|
| pH-Wert | 3,80 | 3,93 | 3,85 |
| Mineralstoffe (nach<br>Veraschung bei 550°C) | 2,20 g ≙ 2,0% | 2,10 g ≙ 2,0% | 2,15 g ≙ 2,0% |
| Vom Gesamtextrakt<br>(= 100%) wurde somit<br>folgender Anteil be-<br>stimmt: | 109,11 g ≙ 96,6% | 99,27 g ≙ 94,5% | 102,19 g ≙ 94,6% |
| Der Kilojoule- (Kilo-<br>kalorien)Gehalt, berechnet<br>laut Nährwert-Kennzeichnungs-<br>VO auf der Basis vorliegender<br>Analysendaten | 1615 kJ (386 kcal) | 1594 kJ (381 kcal) | 1628 kJ (389 kcal) |

EP 0 319 726 B1

|  | Produkt 1 | Produkt 2 | Produkt 3 |
|---|---|---|---|
| **Kationen und Anionen:** | | | |
| Kalium | 600 mg/(17%)* | 630 mg/ (18%)* | 670 mg/ (19%)* |
| Natrium | <10,0 mg/ (~0,5%)* | 10,0 mg/ (0,5%)* | 12,0 mg/ (0,6%)* |
| Calcium | 200 mg/ (25%)* | 50 mg/ (6,3%)* | 60 mg/ (7,5%)* |
| Magnesium | 100 mg/ (30,8%)* | 80 mg/ (24,6%)* | 110 mg/ (33,8%)* |
| Eisen | 4,2 mg/ (28%)* | 1,30 mg/ (8,7%)* | 1,75 mg/ (11,7%)* |
| Zink | 2,7 mg/ (18%)* | 0,85 mg/ (5,7%)* | 1,40 mg/ (9,3%)* |
| Kupfer | 0,60 mg/ (20%)* | 0,85 mg/ (28,3%)* | 0,70 mg/ (23,3%)* |
| Mangan | 1,90 mg/ (52,3%)* | 0,45 mg/ (12,9%)* | 0,82 mg/ (23,4%)* |
| Chlorid | 400 mg | 300 mg | 340 mg |
| Fluorid | ―――― | <0,25 mg | <0,05 mg |
| Phosphor | 400 mg/ (50 %)* | 280 mg/ (35%)* | 350 mg/ (43,8%)* |

*% Anteil des für einen Erwachsenen von der Deutschen Gesellschaft für Ernährung empfohlenen durchschnittlichen Tagesbedarfs

| | Produkt 1 | Produkt 2 | Produkt 3 |
|---|---|---|---|
| Die ermittelten B-Vitamine, gesamt: | 5,85 mg | 8,40 mg | 6,69 mg |
| hiervon: | | | |
| Thiamin / Vit. $B_1$ | 1,15 mg / (95,8%)** | 1,03 mg / (85,8%)** | 1,27 mg / (105,8%)** |
| Riboflavin / Vit. $B_2$ | 0,30 mg / (18,8%)** | 0,37 mg / (23%)** | 0,35 mg / (22%)** |
| *Vitamin $B_6$ (Pyridoxol -HCl) | 0,19 mg / (11%)** | 0,51 mg / (30%)** | 0,26 mg / (15,3%)** |
| *Vitamin $B_{12}$ (Aktivität nach USP) | 5,80µg / (116%)** | 4,25 µg / (85%)** | 5,30 µg / (106%)** |
| Biotin | <10 µg /(~8,3%)** | <10 µg /(~8,3%)** (~7 µg) | <10 µg / (~8,3%)** |
| Niacin | 4,0 mg / (23,5%)** | 5,41 mg / (31,8%)** | 3,90 mg / (23%)** |
| *Pantothensäure (Ca-d-pantothenat) | — | 0,90 mg | 0,74 mg |
| Folsäure | 0,19 mg / ( 47,5%)** | 0,17 mg / (42,5%)** | 0,16 mg / (40%)** |

*Werte bezogen auf / berechnet als - siehe Klammerausdruck

**% Anteil des für einen Erwachsenen von der Deutschen Gesellschaft für Ernährung empfohlenen durchschnittlichen Tagesbedarfs

## Patentansprüche

1. Keimgetreidetrunk, erhältlich durch Keimen des Getreides bei Temperaturen über 25 ° C zur verstärkten Vitaminsynthese, Einmaischen des fertig gekeimten nicht wärmebehandelten Getreides, mit Ausnahme

9

von Hafer, ungetrocknet mit den Wurzelkeimen und damit ohne Substanzverlust in naßvermahlenem Zustand, Maischen unter enzymatischem Aufschluß mittels der korneigenen natürlichen Enzyme bei Temperaturen von 45°C bis 65°C zwischen 1 und 3 Stunden, unter Berücksichtigung eines verstärkten Eiweißabbaus, Gewinnung von mehr löslichen Ballaststoffen und verstärkter Freisetzung von Vitaminen aus dem Zellverband, Verzicht auf Kochstufen im Maischprozess und im weiteren Herstellungsverfahren und Vergären der so erhaltenen Maische, der gegebenenfalls geklärten Würze mit einer Milchsäurekultur die überwiegend L(+)-Milchsäure bildet.

2. Keimgetreidetrunk nach Anspruch 1,
dadurch gekennzeichnet,
daß man die Milchsäuregärung bis zu einem pH-Wert von 4,0 bis 3,7 führt.

3. Keimgetreidetrunk nach Anspruch 1 - 2,
dadurch gekennzeichnet,
daß die noch gröberen, das "mouth-feeling" störende, Getreidepart ikel, z.B. mittels Filter oder Separator oder Dekanter aus der abgebauten milchsauren Getreidemaische abgetrennt werden, diese Partikel mechanisch, z.B. mittels Spalthomogenisator und/oder enzymatisch z.B. mittels Mazerationsenzymen aufgeschlossen werden und damn diese gegebenenfalls nach thermischer Behandlung frm, Ausgangsprodukt wieder zusetzt.

4. Keimgetreidetrunk nach einem der vorherigen Ansprüche,
dadurch gekennzeichnet,
daß er als Trockenprodukt, beispielsweise durch Sprühtrocknung hergestellt wird.

## Claims

1. Cereal-germ drink, obtainable by germination of the cereal at temperatures above 25°C to increase vitamin synthesis, mashing of the ready-germinated and non-heat-treated cereal, with the exception of oats, which is undried with the radicles and thus without loss of substance in the wet-milled state, mashing during enzymatic degradation with the natural kernel enzymes for between 1 and 3 hours at temperatures of 45°C to 65°C, taking account of increasing breakdown of protein, achieving larger quantities of soluble ballast substances and increased release of vitamins from the cellular mass, dispensing with stages of boiling during the mashing process and in the subsequent manufacturing procedure, and fermentation of the mash thus obtained, of the wort, which has, if necessary, been clarified, with a lactic acid culture which predominantly forms L(+)-lactic acid.

2. Cereal-germ drink according to Claim 1,
characterised in that
the lactic acid fermentation is continued until a pH of 4.0 to 3.7 is obtained.

3. Cereal-germ drink according to Claims 1-2,
characterised in that
the even more coarse, "oral sensation"-impairing cereal particles are separated from the decomposed cereal mash lactate, using, for example, a filter or separator or decanter, these particles are degraded mechanically, e.g. using a splitting homogeniser and/or enzymatically, e.g. using macerating enzymes, and these particles are then returned to the starting product, in some circumstances after heat treatment.

4. Cereal-germ drink according to one of the preceding claims,
characterised in that
it is manufactured as a dry product, for example by spray-drying.

## Revendications

1. Boisson aux céréales germées, obtenue par germination des céréales à une température supérieure à 25°C pour renforcer la synthèse des vitamines, empâtage des céréales complètement germées et n'ayant pas subi de traitement thermique, à l'exception de l'avoine, non séchées, avec les radicelles et donc sans perte de substances, à l'état broyé par voie humide, empâtage avec décomposition enzymatique au moyen d'enzymes naturelles propres aux grains, à une température comprise entre 45°C et 65°C, pendant 1 à 3 heures, en prenant en considération une protéolyse renforcée, récupération d'une plus grande quantité de substances stériles solubles et libération augmentée de vitamines dans le système cellulaire, absence d'opération de cuisson pendant l'opération de trempe et pendant le procédé ultérieur de fabrication, et fermentation de la trempe ainsi obtenue et du moût éventuellement filtré, avec une culture d'acide lactique qui forme surtout l'acide L( + )-lactique.

2. Boisson aux céréales germées selon la revendication 1, caractérisée en ce qu'on effectue la fermentation à l'acide lactique jusqu'à l'obtention d'un pH valant de 4,0 à 3,7.

3. Boisson aux céréales germées selon la revendication 1 ou 2, caractérisée en ce que les particules de céréales encore assez grossières, qui gênent la sensation gustative ("mouth-feeling"), sont séparées de la trempe de céréales lactique décomposée, par exemple au moyen d'un filtre ou d'un séparateur ou d'un décanteur, ces particules sont décomposées mécaniquement, par exemple au moyen d'un homogénéisateur à fentes et/ou enzymatiquement, par exemple à l'aide d'enzymes de macération, et ensuite, ces particules sont ajoutées de nouveau au produit de départ, éventuellement après un traitement thermique.

4. Boisson aux céréales germées selon une des revendications précédentes, caractérisée en ce qu'elle est produite sous la forme d'un produit sec, par exemple par séchage par pulvérisation.